# EUROPEAN PATENT SPECIFICATION

(11) **EP 1 710 958 B1**
(45) Date of publication and mention of the grant of the patent: **07.01.2009**
(21) Application number: 06111862.6
(22) Date of filing: 28.03.2006
(51) Int. Cl.: H04L 12/24

(54) **Method and apparatus for detecting topology of network**
Verfahren und Vorrichtung für Detektion von Netzwerktopologie
Méthode et appareil pour la détection de topologie d'un réseau

(30) Priority: 07.04.2005 KR 20050029096
(43) Date of publication of application: 11.10.2006
(73) Proprietor: Samsung Electronics Co., Ltd., Suwon-si 442-742 Gyeonggi-do (KR)
(72) Inventor: Shin, Kue-hwan, Gyeonggi-Do (KR); Yi, Kyoung-hoon, Seoul (KR); Yeom, Ik-jun, c/o Korea Adv. Inst. of Science and Technology, Daejeon Metropolitan City (KR); Kim, Jong-hwan, c/o Korea Adv. Inst. of Science and Technology, Daejeon Metropolitan City (KR); Ko, Eui-yul, c/o Korea Adv. Inst. of Science and Technology, Daejeon Metropolitan City (KR)
(74) Representative: Walaski, Jan Filip

(56) References cited:
- WO-A-03/028291
- GB-A- 2 371 708
- US-A- 5 293 635
- US-A- 5 546 540
- US-A- 5 606 664

## Description

The present invention relates to a method and apparatus for detecting the topology of a network.

In a communication network, the term a "bridge" refers to, but is not limited to, a product which connects one Local Area Network (LAN) to another LAN that uses the same protocol, such as Ethernet or Token Ring. Workstations that are connected to each LAN can take advantage of the expansion of their respective LAN without changing the protocol thereof. A bridge operates in such a way as to examine respective messages on a LAN, accept messages to be transmitted within the same LAN, and pass over messages to be transmitted to other LANs which are connected thereto.

On networks connected through a bridge, the addresses of computers or nodes have no specific relationship with actual locations. For this reason, although all messages are transmitted to all addresses on networks, the messages are accepted only by destination nodes. The bridge checks which addresses reside on which networks, and previously prepares a table so that the messages are precisely transferred to other networks. Such a table is referred to as a filtering database.

Since networks connected through a bridge are generally connected to LANs and broadcast all messages, unnecessary network traffic may flood a network in the case of a large network. For this reason, routing networks, such as the Internet, allow messages or packets to be transferred in one direction, not in all directions, by assigning addresses to respective nodes.

In the datalink layer of a network, the bridge copies data frames from a network to a subsequent network along a communication line.

Entities, which are connected to the bridge and communicate, are called nodes. In the construction of a network, a plurality of bridges may be located between the nodes. As a result, in order to manage networks, it is necessary to manage a topology of bridges and to obtain information about the connections between nodes and bridges.

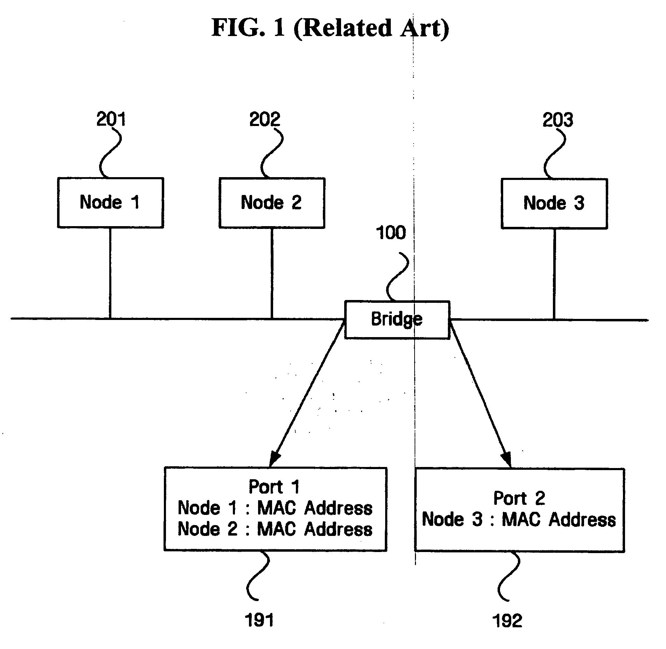

Figure 1 is a diagram schematically illustrating the operation of a bridge 100. In Figure 1, node 1 (201) and node 2 (202) are connected to the same line, and node 3 (203) is connected to another line. Meanwhile, the bridge 100 organizes information about nodes connected to both ports (port 1 and port 2) thereof into a table or a database, and then stores it in the filtering database.

The information about the connection of node 1 (201) and node 2 (202) to port 1 and the Media Access Control (MAC) addresses of node 1 (201) and node 2 (202) are stored in storage unit 191. The information about the connection of node 3 (203) to port 2 and the MAC address of node 3 (203) are stored in storage unit 192. The bridge 100 determines whether data received through port 1 is to be transferred to a node connected to port 2. If the data is to be transferred to the node connected to port 2, the bridge 100 transfers the data, which is received through port 1, to port 2. In contrast, if the data is not to be transferred to the node connected to port 2, the bridge discards the data. If there is a plurality of ports, and data received through a specific port is not to be transferred to some port other than the specific port, the bridge 100 uses a mechanism for discarding the data.

If node 1 (201) transmits data to node 2 (202), the bridge 100 does not hand over the data, which is received through port 1, to port 2. Since node 1 (201) and node 2 (202) are connected to the same line, node 2 (202) can receive the data. Meanwhile, if node 1 (201) transmits data to node 3 (203), the bridge 100 transmits the data through port 2 because the information about the connection of node 3 (203) to port 2 is stored in storage unit 192.

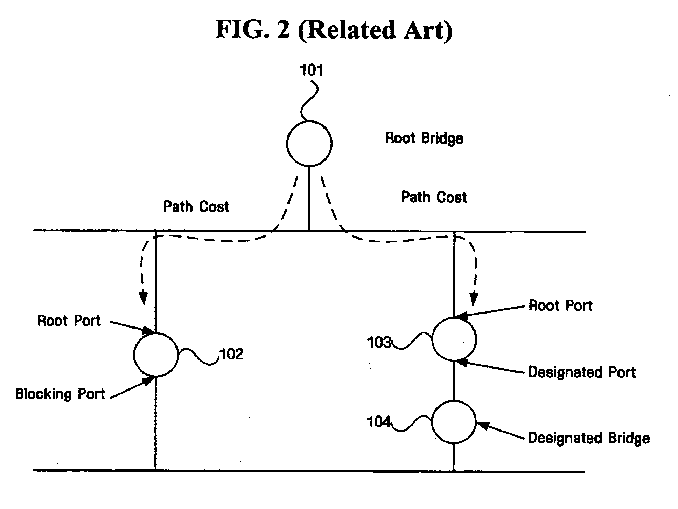

Conventionally, in order to detect the topology of a bridge, a spanning tree protocol is used. The detection of the topology prevents a loop from being generated in a network that is composed of bridges, thereby preventing messages from being excessively transmitted through the loop. Detailed information about the spanning tree protocol is specified in IEEE 802.1d. The operation of the spanning tree is illustrated in Figure 2.

Figure 2 is a diagram illustrating an example of the operation of the spanning tree protocol in a conventional network. First, a root bridge 101 is selected. At this time, various criteria may be applied to the selection of such a root bridge. For example, the bridge having the lowest priority is selected, and if there are two bridges having the lowest priority, the bridge having the lowest MAC address is selected as the root bridge. Furthermore, after optimal paths from respective bridges to the root bridge have been selected, root ports are selected.

The term "root ports" refers to, but is not limited to, ports connected to the root bridge. Then, the root cost is calculated by adding up the costs of the bridges on the path to the root bridge. Furthermore, a designated bridge 104, which is in charge of communication from respective broadcast segments to the root bridge, is selected. Finally, a blocking port is selected. The term "blocking port" refers to, but is not limited to, a port that has no need to transmit data because the data is transmitted through some other port. Since a designated bridge 104 exists, the bridge 102 has no need to transmit any data, and thus has a blocking port.

Through the above-described process, looping in which a message is repeatedly and unnecessarily transmitted is prevented and the message can be transmitted through an optimal path.

However, the above-described protocol is used to detect a topology of bridges and prevent looping, not to detect a topology of nodes which constitute a network. Furthermore, the protocol used in a router is used only for routing and cannot detect a bridge in an actual sub-network. Particularly, a bridge, which constitutes part of a small-sized network, such as a home network, may not support complicated protocols, so that a method of simply detecting and managing a topology of bridges and nodes is needed.

WO 03/028291 A2 discloses a method for the automated recording of topological data of a communications network.

Accordingly, the present invention relates to detecting and managing information about a topology of bridges and nodes which constitute a network.

According to the invention, there is provided a method of detecting a topology of a network according to claim 1, and an apparatus for detecting a topology of a network according to claim 13.

The present invention also relates to managing a network without adding a complicated protocol to a bridge on a small-sized network such as a home network.

An aspect of the present invention provides a method and apparatus for detecting a topology of nodes and bridges that constitute a network.

The method of detecting topologies of nodes and bridges constituting a network, according to an exemplary embodiment of the present invention, includes the operations of transmitting a message requesting mode switching to the nodes which constitute the network; transmitting check messages to the nodes; receiving reception node information, which results from reception of the check messages by the nodes, from the nodes; calculating information about connection of nodes to each line from the reception node information; and extracting information about the topology of bridges and nodes based on the connection information and the reception node information.

The method of detecting a topology of nodes and bridges, according to another exemplary embodiment of the present invention, includes the operations of receiving a message requesting mode switching from a first node; receiving check messages from a second node in a switched mode; and transmitting reception node information having receiver information of the received check messages, to a third node.

The network apparatus according to another exemplary embodiment of the present invention, includes a message generation unit for generating a message requesting mode switching and check messages; a transmission unit for transmitting the messages to the nodes; a reception unit for receiving reception node information which results from reception of the check messages by the nodes, from the nodes; a connection information calculation unit for calculating information about connection of the nodes to each node from the reception node information; and a topology information extraction unit for extracting information about topology of bridges and nodes based on the connection information and the reception node information.

The aspects, features and advantages of the present invention will be more clearly understood from the following detailed description of exemplary embodiments of the present invention taken in conjunction with the accompanying drawings, in which:
Figure 1 is a diagram schematically illustrating an example of the operation of a bridge;
Figure 2 is a diagram illustrating an example of the operation of a spanning tree protocol in a conventional network;
Figure 3 is a diagram illustrating the flow of messages transmitted and received in order to detect the topology of a network and the connection of bridges according to an exemplary embodiment of the present invention.
Figure 4 is a diagram illustrating an example of messages transmitted and received after the operation of Figure 3, in order to detect the topology of a network and the connection of bridges according to an exemplary embodiment of the present invention and related operation;
Figure 5 is a view illustrating an algorithm of detecting bridges according to an exemplary embodiment of the present invention;
Figure 6 is a diagram illustrating an algorithm of calculating the topology of a bridge according to an exemplary embodiment of the present invention;
Figure 7 is a diagram illustrating work sequences in a master node; and
Figure 8 is a diagram illustrating the construction of a network apparatus for extracting network topology information according to an exemplary embodiment of the present invention.

Reference now should be made to the accompanying drawings, in which the same reference numerals are used throughout the different drawings to designate the same or similar components.

First, several terms used in the present specification are briefly described below. It should be noted that the following description is given only for purposes of illustration so as to assist one of ordinary skill in the art to understand the aspects of the present invention, and does not limit the scope of the present invention.

The term "node" refers to, but is not limited to, each of the devices that constitute a network, and includes, for instance, a computer, a notebook, a fax machine, etc. Furthermore, nodes may also include home appliances, for example, a TV, a refrigerator or an audio device.

The term "promiscuous mode" refers to, but is not limited to, a mode in which a node unconditionally receives packets or frames that are transmitted or received through a corresponding line even if the data is not targeted for the node. As a result, the node can receive frames that are transmitted to other nodes. Promiscuous mode is generally used at an agent node that manages a network and monitors traffic. When promiscuous mode is entered, the node can sense data to be received by other nodes which are physically connected to a single line. That is, promiscuous mode enables the node to read all data packets transmitted and received through the line to which the node is connected.

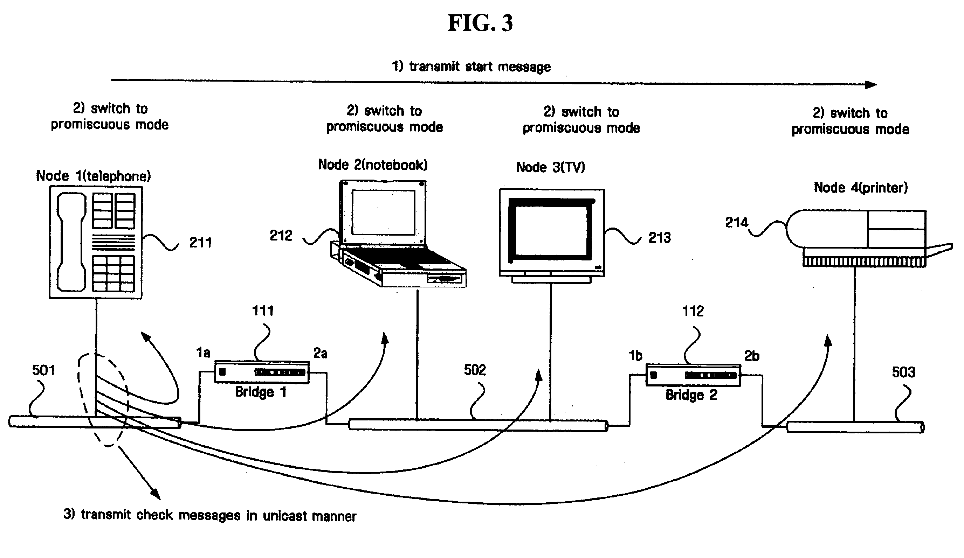

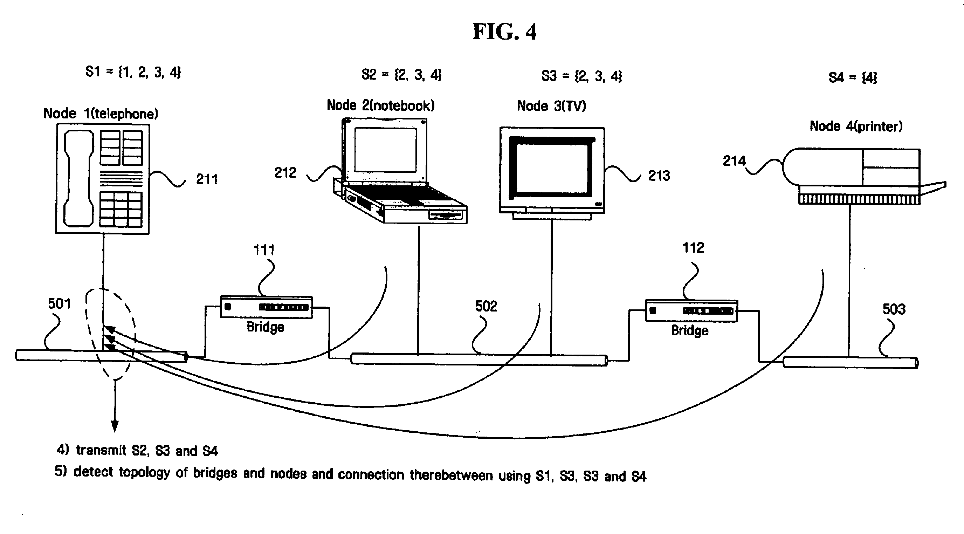

The term "topology" refers generally to, but is not limited to, the connections of nodes. Topology information represents the configuration and method in which many devices connected to a network are implemented. Using topology information, the overload of a network can be prevented and transmission quality can be properly adjusted. The topology of bridges and nodes can be known using the flows shown in Figures 3 and 4 without the provision of a separate protocol.

Figure 3 is a diagram illustrating the flow of messages transmitted and received in order to detect the topology of a network and the connection of bridges according to an exemplary embodiment of the present invention.

In Figure 3, four nodes are connected to two bridges. Of the nodes, master node 1 (211) transmits a start message in a broadcast mode. A "broadcast mode" refers to, but is not limited to, a mode in which data is transmitted to all nodes. The start message is transferred to all of the nodes, and the nodes, which constitute a network, switch to promiscuous mode. As a result of the switching to promiscuous mode, each of the nodes can read all of the data, such as packets or frames, which are transmitted or received through a line connected thereto. After the reception mode has been switched to promiscuous mode, the master node 1 (211) transmits check messages to all of the nodes that exist on the network, in a unicast manner. The term "unicast transmission" refers to, but is not limited to, the transmission of a message to a receiver node only. However, although the check messages are transmitted in a unicast manner, it is possible to sense the check messages that are to be transmitted to the other nodes because all of the nodes of the network have switched to promiscuous mode. The following description starts from node 1 (211).

First, node 1 (211) transmits a message to bridge 1 (111) in a unicast manner. Since the bridge 1 (111) knows that node 1 (211) has been connected to port 1a, which is connected to a line 501, the bridge 1 (111) does not transmit a check message to port 2a. The construction of a filtering database having information about the connections between ports and nodes will be described below. As a result, the check message, which is transmitted by node 1 (211) to the bridge 1 (111), is sensed only by the bridge 1 (111).

Meanwhile, when node 1 (211) transmits a check message to node 2 (212), the check message is transmitted through the bridge 1 (111) and a line 502 to node 2 (212). Therefore, the check message, which is transmitted by node 1 (211), is transmitted to the line 502, so that node 3 (213), which is in promiscuous mode, can receive the check message. Therefore, node 2 (212) and node 3 (213) both receive the check message targeted for node 2 (212). Meanwhile, since bridge 2 (112) knows that node 2 (212) is connected to the line 502, which is connected to port 1b through the filtering database, the bridge 2 (112) does not transmit a check message to a line 503 through port 2b. As a result, although node 4 (214) is in promiscuous mode, node 4 (214) cannot receive the check message targeted for node 2 (212) because the check message is not transmitted through the line 503. Of course, for node 1 (211), a check message is transmitted, so that node 1 (211), which is in promiscuous mode, can also receive the check message.

In the same manner as described above, when node 1 (211) transmits a check message to node 3 (213), both node 2 (212) and node 3 (213) receive the check message. Of course, since node 1 (211) transmits the check message, node 1 (211), which is in promiscuous mode, can also receive the check message. Similarly, since the check message is not transmitted to node 4 (214) through bridge 2 (112), node 4 (214) cannot receive the check message targeted for node 3 (213) even if node 4 (214) is in promiscuous mode.

Next, node 1 (211) transmits the check message to node 4 (214). The check message is received by node 4 (214) through bridge 1 (111), the line 501, bridge 2 (112) and the line 502. Therefore, node 1 (211), node 2 (212), node 3 (213) and node 4 (214), which are connected to the line 501, the line 502 and the line 503, respectively, all receive the check message targeted for node 4 (214).

After the completion of the transmission of the check messages to all nodes, the results of the reception of the check messages are received, and the configuration of nodes and bridges is examined. This is described below with reference to Figure 4.

Figure 4 is a diagram illustrating an example of messages transmitted and received after the operation of Figure 3 in order to detect the topology of a network and the connection of bridges according to an exemplary embodiment of the present invention and related operation.

The nodes 1 (211), 2 (212), 3 (213) and 4 (214) each collect information about the receivers of received check messages. Since node 1 (211) has sensed check messages targeted for node 1 (211), node 2 (212), node 3 (213) and node 4 (214), this information can be represented as set S1={1, 2, 3, 4}. Sᵢ is a set of the reception node numbers of check messages which have been sensed by node *i*. Therefore, set S2 is {2, 3, 4}, set S3 is {2, 3, 4} and set S4 is {4}. Nodes 1 (211), 2 (212), 3 (213) and 4 (214) transmit the reception node information S1, S2, S3 and S4, which are collected by themselves, to master node 1 (211). Node 1 (211) then checks which nodes constitute a line and between which lines bridges are connected based on the collected information, and extracts a topology of bridges and the connections between nodes.

In Figure 4, the reception node information, which is transmitted by each node, is the collection of the information about the receivers of check messages. If the receivers of the check messages are the nodes themselves, or are connected to the same line, or the check messages are transmitted through a line connected thereto, the information about receivers is added to the reception node information. Therefore, when two pieces of reception node information of two nodes are identical to each other, it implies that the two nodes are connected to the same line.

As described with reference to Figures 3 and 4, a bridge must determine whether to transmit data, which is received via a specific port, to another port, or must determine to which one of a plurality of ports data will be passed over if there is a plurality of ports. For this purpose, the bridge must know the connections between nodes and ports, or a port through which a corresponding node is reachable. This information is stored in the filtering database. During the operation of the network, the information is previously stored through data transmission and reception. However, when the network is reset or newly operates, such information does not exist. Therefore, if such information does not exist in the filtering database, the bridge determines through which port the response to an Address Resolution Protocol (ARP) has been transmitted or received while receiving the MAC address of a corresponding node through the ARP packet. For convenience of description, in the drawings, the port located to the left of a bridge is referred to as, for example, port 1, 1*a*, 1*b*, etc. and the port located to the right of a bridge is referred to, for example, as port 2, 2*a,* 2*b,* etc.

For example, in Figure 3, when node 1 (211) desires to transmit a check message to node 2 (212) in a unicast manner, and does not know the MAC address of node 2 (212), node 1 (211) transmits an ARP packet with the IP address or identifier of node 2 (212) set therein. Although the ARP packet may be transmitted to the entire network, a response thereto can be made only by node 2 (212). Since the response to the ARP packet is transmitted through bridge 1 (111), bridge 1 (111) can determine that node 2 (212) is reachable through the port 2a. As a result, bridge 1 (111) sets information about node 2 (212) in the filtering database of the port 2a.

Meanwhile, when node 1 (211) transmits a check message to node 4 (214) in a unicast manner, node 1 (211) transmits an ARP packet with the IP address or identifier of node 4 (214) set therein because node 1 (211) also does not know the MAC address of node 4 (214). The ARP packet can be transmitted to the entire network, but a response to it is made only by node 4 (214). Since the response to the ARP packet is transmitted through bridge 2 (112), bridge 2 (112) can determine that node 2 (212) is reachable through the port 2b. As a result, bridge 2 (112) sets information about node 4 (214) in the filtering database of the port 2*b*. Similarly, since the response to the ARP packet is transmitted through bridge 1 (111) to node 1 (211), information about the fact that node 4 (214) is reachable through port 2a of bridge 1 (111) is set. When the filtering database is filled with information about the nodes, data is not unnecessarily transmitted to other lines. For example, when node 1 (211) transmits data to node 3 (213), bridge 1 (111) passes the data therethrough, but bridge 2 (112) does not pass the data therethough.

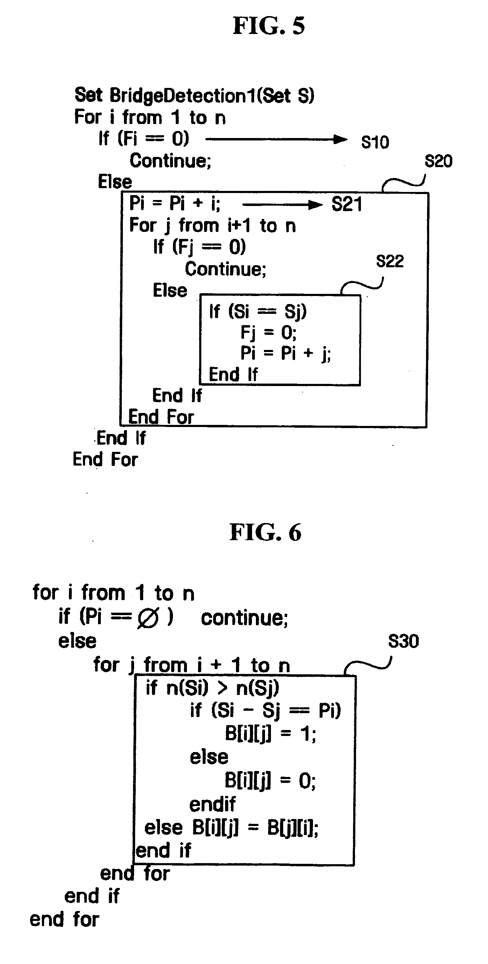

Figure 5 is a view showing an algorithm of detecting bridges according to an exemplary embodiment of the present invention. Set S is composed of a plurality of 'Sᵢ's which are transmitted to node 1 (211) by respective nodes, as shown in Figure 4. In the example of FIG 4, set S is {(1, 2, 3, 4), {2, 3, 4}, {2, 3, 4}, {4}}. P is a set which has a number of sets equal to the number of all nodes, as elements, and a basic value thereof is {{Ø}, ... , (Ø)}. F is a set of flags which has a number of components equal to the number of all nodes, and a basic value thereof is {-1, ... , -1}. P is a set of 'P*ᵢ*'s, which are the sets of the nodes connected to the same line as node *i* through the algorithm of Figure 5. That is, P represents the information about the connection of nodes connected to the same line. F represents information about whether the calculation of node sets to which respective nodes belong, has been completed. Before the calculation using the algorithm, all of F have -1. F*ᵢ* represents information about node *i.* When P*ᵢ* is obtained, other nodes, which exist in the same P*ᵢ*, also have the same information and, therefore, further calculation is not performed.

At operation S10, it is determined that F*ᵢ* is 0. If F*ᵢ* is 0, it represents the fact that set P*ᵢ*, to which *i* node belongs, has been obtained, so the process proceeds to the next node *i*+1. However, if F*ᵢ* is not 0, operation S20 of obtaining P*ᵢ* is performed.

At operation S21, node *i* is added to P*ᵢ*. The reason for this is that it is natural that node *i* is connected to the line connected to node *i*. Next, the connection of nodes next to node *i* are examined. At this time, the reason why the nodes next to node *i* are examined is that nodes prior to node *i* have undergone operation S20.

To examine nodes ranging from a node next to node *i* to node *n,* the factor *j* is used. First, it is examined whether F*ⱼ* is 0. If F*ⱼ* is 0, it implies that P*ⱼ* for node *j* has already been obtained. That is, since node *k* prior to node *i* has included *j* in the process of obtaining P*ₖ*, the process need not proceed. If F*ⱼ* is not 0 but -1, the P*ⱼ* for node *j* does not belong to other P*ₖ* groups, so that S*ᵢ* and S*ⱼ* are compared with each other.

Since, S*ᵢ* is connected to the same line as S*ⱼ*, if S*ᵢ* is identical to S*ⱼ*, F*ⱼ* is set to 0 and node *j* is added to P*ᵢ* at operation S22. F*ⱼ* is set to 0, so that subsequent repetitive calculation can be prevented. Furthermore, operation S20 is also performed on the next node. As a result, nodes connected to the same node are grouped. Based on the results obtained in Figure 4, set P is {{1}, (2, 3), Ø, {4}}. Set P indicates that node 1 (211) is exclusively connected to a line, that node 2 (212) and node 3 (213) are connected to the same line, and that node 4 (214) is also exclusively connected to a line. As a result, information about the connection of nodes, which are connected to the same line, is known through set P.

Meanwhile, since set P, which represents information about nodes that share lines, has been obtained, it is necessary to calculate the topology of a bridge which connects lines.

Figure 6 is a diagram illustrating an algorithm of calculating the topology of a bridge according to an exemplary embodiment of the present invention. An *n*×*n* matrix B can be filled with P and S, which are obtained by the algorithm of Figure 5. If B [*i*] [*j*] is 0, it indicates that P*ᵢ* and P*ⱼ* are not connected by a bridge. If B[*i*][*j*] is 1, it indicates that P*ᵢ* and P*ⱼ*, are connected by a bridge. Therefore, B[*i*][*j*] has the same value as B[*j*][*i*]. At operation S30, whether a bridge exists between P*ᵢ* and P*ⱼ* is examined. If the difference between S*i* and S*j* is P*ᵢ*, 1 is assigned to B [*i*] [*j*] because P*ᵢ* and P*ⱼ* are connected to each other.

The results calculated by the algorithm of Figure 6 are shown in the following table.

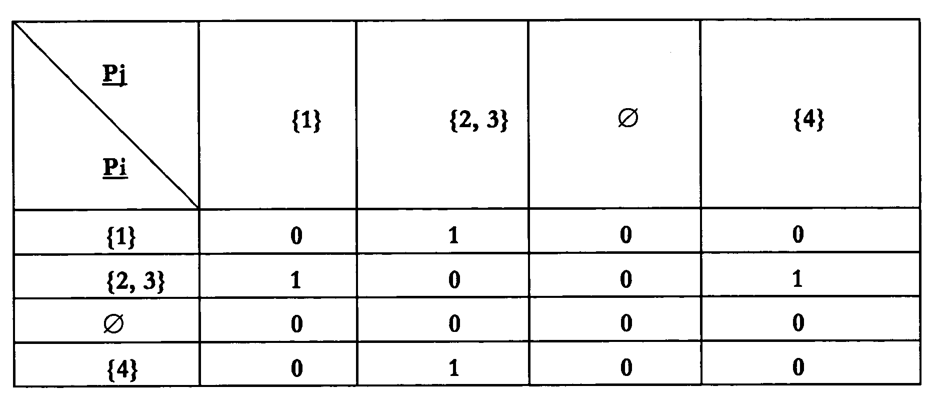

From the above results, it can be known that a bridge exists between a line to which node 1 (211) is connected, and a line to which node 3 (213) is connected. Furthermore, it can be known that a bridge exists between a line to which node 2 (212) and node 3 (213) are connected, and a line to which node 4 (214) is connected. From matrix B, topology information about the locations of bridges between nodes can be known.

The algorithm of Figures 5 and 6 is an exemplary embodiment of examining the connections between nodes, and it may be variously implemented by other methods.

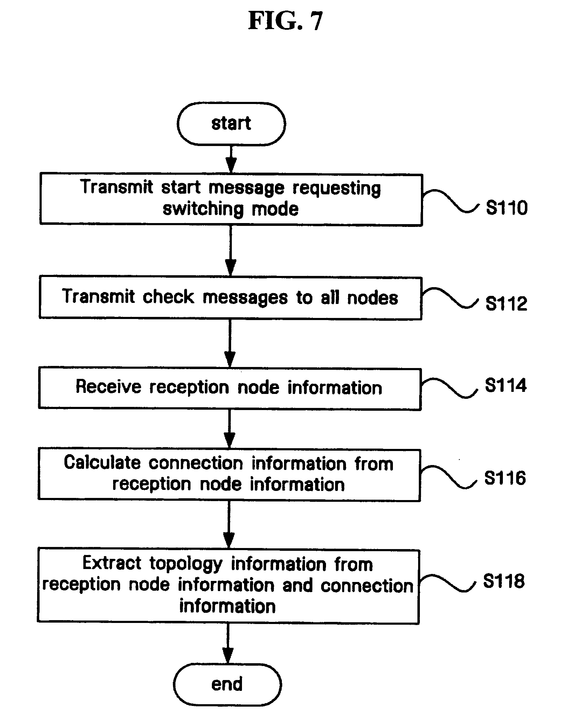

Figure 7 is a diagram illustrating the sequence of the operation of a master node. First, a master node must be determined. A specific node may be selected as the master node, or the master node may be changed by the selection of a user. The master node transmits a start message requesting mode switching from all nodes at operation S110. Since the start message is transmitted in a broadcast manner, the master node can transmit the start message to other nodes even if the master does not know the MAC addresses of other nodes. The nodes that receive the start message, switch their own reception mode to promiscuous mode. Therefore, the nodes can receive all packets that pass through the lines connected thereto.

The master node transmits a check message at operation S112. At this time, the check message is transmitted in a unicast manner, so that one check message is transmitted to one node. Transmission in a unicast manner implies the transmission of one message with one node set to a receiver. Since all nodes have been switched to promiscuous mode, each node can receive messages that are transmitted to other nodes that are connected to the same line. When check messages are transmitted to all nodes in a unicast manner, respectively, each node can receive a check message targeted for itself or messages targeted for other nodes of a line to which the node is combined or connected, and can generate reception node information by collecting information about the receivers of the messages.

The master node receives the reception node information from other nodes at operation S114. An example of the reception node information is S*i* in Figure 4.

Furthermore, the master nodes calculates connection information from the reception node information at operation S116. An example of the connection information is P*i*, obtained by the algorithm of Figure 5. Finally, the master node extracts a topology of nodes and bridges from the reception node information and the connection information at operation S118. The algorithm of Figure 6 is an example of operation S118.

In Figure 7, one node, as a master node, performs all of the operations of transmitting a start message, transmitting a check message, receiving the results thereof and extracting topology information. However, the steps are not necessarily performed by one node.

For example, when transmitting a start message at a specific time, a first node designates, in the start message, a second node to transmit a check message. Then, after other nodes have been switched to promiscuous mode, the second node can transmit the check message. Furthermore, the reception node information, which is created by each node that has received the check message, is transmitted to the third node, so that the third node can perform calculation. This is enabled by including the IP or identification information of the third node in the check message or the start message. As a result, the steps of Figure 7 may be separately performed by several nodes.

Furthermore, it may be unnecessary to transmit a start message. For instance, each node may be set such that it obtains topology information at predetermined time intervals. Then, when the predetermined time is reached, all of the nodes automatically switch to promiscuous mode, and the node that is master node transmits a check message. Furthermore, reception node information is received from each node, which receives the check message, and operations S116 and S118 of Figure 7 are performed.

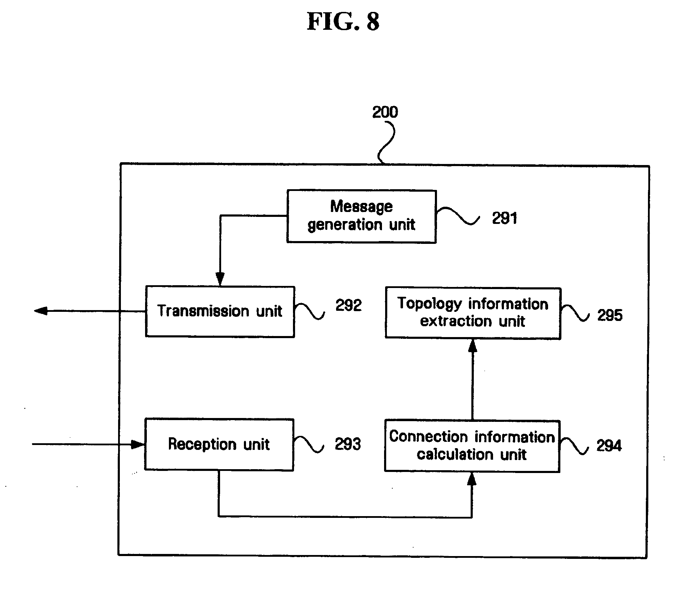

Figure 8 is a diagram illustrating the construction of a network apparatus for extracting network topology information according to an exemplary embodiment of the present invention.

The terms "unit" or "module" as used herein, refers to, but is not limited to, a software or hardware component, such as a Field Programmable Gate Array (FPGA) or an Application Specific Integrated Circuit (ASIC), which performs certain tasks. A module may advantageously be configured to reside on the addressable storage medium and may be configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. Furthermore, the components and modules can be implemented to execute on one or more central processing units (CPUs) in a device or on a security multimedia card.

The term "network apparatus" refers to, but is not limited to, an apparatus capable of transmitting and receiving data with other apparatuses. Herein, a network apparatus includes, for example, a refrigerator, a television, and a microwave oven having a communication function, which constitute a home network, in addition to a computer, a notebook, a Personal Digital Assistant (PDA), a FAX machine, etc. Furthermore, a network apparatus includes the above-described node. As shown in Figure 8, the network apparatus 200 includes a message generation unit 291, a transmission unit 292, a reception unit 293, a connection information calculation unit 294 and a topology information extraction unit 295.

The message generation unit 291 generates a start message requesting other nodes to switch an operation mode so as to extract topology, and generates a check message to be transmitted to each node. The transmission unit 292 transmits the generated messages to other nodes. In an exemplary embodiment, a start message requesting mode switching is transmitted in a broadcast manner, so that all nodes can receive the start message. Meanwhile, the check message, which will be transmitted to each node, may be transmitted in a unicast manner, so that only the node designated as a receiver can receive the check message. The nodes, which are switched to promiscuous mode according to an exemplary embodiment of the present invention, can receive check messages which are transmitted to other nodes connected to the same line.

The reception unit 293 receives reception node information, which is generated and transmitted by nodes that receive the check messages, and transmits it to the connection information calculation unit 294. The connection information calculation unit 294 calculates the connections of nodes to each line based on the reception node information. For example, the algorithm of Figure 5 may be performed.

When obtaining the information about the connection of respective nodes, the topology information extraction unit 295 extracts the information about a topology of bridges and nodes. The topology information is information about the existence of each bridge between node connections and the connections of nodes to each bridge.

Figure 8 is a diagram illustrating an example in which a master node, which transmits a start message and check messages, also calculates topology information. In the case where the master node designates the node to receive the check message and from which the topology information has been extracted when transmitting the start message and the check message, or such a node has been previously determined, the message generation unit 291 may not be included.

The present invention can detect information about the topology of bridges and nodes that constitute a network.

The present invention can manage a network without adding a complicated protocol to a bridge on a small-sized network such as a home network.

Although exemplary embodiments of the present invention have been disclosed for illustrative purposes, those skilled in the art will appreciate that various modifications, additions and substitutions are possible, without departing from the scope of the invention as defined by the accompanying claims.

## Claims

1. A method of detecting a topology of a network, the method comprising:
switching terminal devices (211, 212, 213, 214) of the network to a promiscuous mode;
transmitting check messages to respective terminal devices (211, 212, 213, 214) of the network by one of the terminal devices (211);
receiving reception node information from said respective terminal devices, the reception node information including information about sensed check messages destined for the respective terminal device and about check messages destined for other target terminal devices;
calculating information about connection of the terminal devices (211, 212) from the reception node information by one of the terminal devices; and
extracting information about the topology of a bridge (111) and the connection between terminal devices (211, 212, 213, 214) based on the calculated connection information and the reception node information.

2. The method according to claim 1 including
transmitting the check messages to the terminal devices of the network at predetermined time intervals; and
calculating information about connection of the terminal devices to a line from the reception node information.

3. The method according to claim 1 including transmitting a message to the terminal devices of the network, wherein the message requests the switch to the promiscuous mode.

4. The method according to claim 3, wherein some of the terminal devices (212, 213) receive the check message for another target terminal device (214) when switched to the promiscuous mode and the reception node information comprises information about whether some of the terminal device receives the check message for another target terminal device or not.

5. The method according to any preceding claim, wherein the transmitting the check messages is performed by a first terminal device; the receiving from the respective terminal devices is performed by a second terminal device; and the calculating and the executing is performed by a third terminal device.

6. The method according to claim 5, wherein the check messages are transmitted in a unicast manner, and the transmitting of the check messages comprises transmitting a check message targeted for a fourth terminal device to another terminal device when switched to the promiscuous mode.

7. The method according to claim 6, wherein the fourth terminal device is connected to a same line as the second terminal device.

8. The method according to any one of claims 5 to 7, wherein at least two terminal devices of the first terminal device, the second terminal device and the third terminal device are identical to each other.

9. The method according to claim 4 or 5, wherein some of the terminal devices collect information about the target terminal device for the check messages, and the reception device information comprises the collected information for one of the terminal device of the network.

10. The method according to any preceding claim, wherein the network comprises a home network.

11. The method according to any preceding claim, wherein the check messages are transmitted in a unicast manner.

12. A network configured to perform a method as claimed in any preceding claim.

13. An apparatus for detecting a topology of a network, the apparatus comprising:
a message generation unit (291) for generating messages that request mode switching and check messages;
a transmission unit (292) for transmitting the messages that request a switch to a promiscuous mode and the check messages to respective terminal devices (211, 212, 213, 214) of the network;
a reception unit (293) for receiving reception node information from the terminal devices, the reception node information including information about sensed check messages destined for the respective terminal device and about check. messages destined for other target terminal devices ;
a connection information calculation unit (294) for calculating information about connection of the terminal devices from the reception node information; and
a topology information extraction unit (295) for extracting information about the topology of a bridge (111) and the connections between the terminal devices based on the connection information and the reception device information.

14. The apparatus according to claim 13, wherein a terminal device receives the check message for another target terminal device when switched to the promiscuous mode and the reception node information comprises information about whether the respective terminal device receives the check message for another target terminal device or not.

## Patentansprüche

1. Verfahren zum Erfassen einer Topologie eines Netzwerkes, wobei das Verfahren umfasst:
Umschalten von Endgerätevorrichtungen (211, 212, 213, 214) des Netzwerkes auf eine vermischte Betriebsart;
Senden von Prüfnachrichten zu entsprechenden Endgerätevorrichtungen (211, 212, 213, 214) des Netzwerkes durch eine der Endgerätevorrichtungen (211);
Empfangen von Empfangsknoteninformationen von den entsprechenden Endgerätevorrichtungen, wobei die Empfangsknoteninformationen Informationen über erfasste Prüfnachrichten, die für das jeweilige Endgerät bestimmt sind, und über Prüfnachrichten beinhalten, die für andere Zielendgerätevorrichtungen bestimmt sind;
Berechnen von Informationen über die Verbindung der Endgerätevorrichtungen (211, 212) aus den Empfangsknoteninformationen durch eine der Endgerätevorrichtungen; und
Extrahieren von Informationen über die Topologie einer Brücke (111) und die Verbindung zwischen den Endgerätevorrichtungen (211, 212, 213, 214) auf der Basis der berechneten Verbindungsinformationen und der Empfangsknoteninformationen.

2. Verfahren nach Anspruch 1, umfassend
das Senden der Prüfnachrichten zu den Endgerätevorrichtungen des Netzwerkes zu vorbestimmten Zeitintervallen; und
Berechnen von Informationen über die Verbindung der Endgerätevorrichtungen zu einer Leitung aus den Empfangsknoteninformationen.

3. Verfahren nach Anspruch 1, umfassend das Senden einer Nachricht zu den Endgerätevorrichtungen des Netzwerkes, wobei die Nachricht anfordert, zur vermischten Betriebsart umzuschalten.

4. Verfahren nach Anspruch 3, bei dem einige der Endgerätevorrichtungen (212, 213) die Prüfnachricht für eine weitere Zielendgerätevorrichtung (214) empfangen, wenn zur vermischten Betriebsart umgeschaltet wird, und die Empfangsknoteninformationen Informationen darüber enthalten, ob eine der Endgerätevorrichtungen die Prüfnachricht für eine weitere Zielendgerätevorrichtung empfängt oder nicht.

5. Verfahren nach einem der vorhergehenden Ansprüche, bei dem das Senden der Prüfnachricht durch eine erste Endgerätevorrichtung ausgeführt wird; das Empfangen von den entsprechenden Endgerätevorrichtungen durch eine zweite Endgerätevorrichtung ausgeführt wird; und das Berechnen und die Ausführung durch eine dritte Endgerätevorrichtung ausgeführt wird.

6. Verfahren nach Anspruch 5, bei dem die Prüfnachrichten Punkt-zu-Punkt gesendet werden und das Senden der Prüfnachrichten das Senden einer Prüfnachricht, die für eine vierte Endgerätevorrichtung bestimmt ist, zu einer weiteren Endgerätevorrichtung beinhaltet, wenn in die vermischte Betriebsart umgeschaltet wird.

7. Verfahren nach Anspruch 6, bei dem die vierte Endgerätevorrichtung mit derselben Leitung verbunden ist wie die zweite Endgerätevorrichtung.

8. Verfahren nach einem der Ansprüche 5 bis 7, bei dem wenigstens zwei Endgerätevorrichtungen der ersten Endgerätevorrichtung, der zweiten Endgerätevorrichtung und der dritten Endgerätevorrichtung einander identisch sind.

9. Verfahren nach Anspruch 4 oder 5, bei dem einige der Endgerätevorrichtungen Informationen über die Zielendgerätevorrichtung für die Prüfnachrichten sammeln und die Empfangsvorrichtungsinformationen die gesammelten Informationen für eine der Endgerätevorrichtungen des Netzwerkes beinhalten.

10. Verfahren nach einem der vorhergehenden Ansprüche, bei dem das Netzwerk ein Heimnetzwerk beinhaltet.

11. Verfahren nach einem der vorhergehenden Ansprüche, bei dem die Prüfnachrichten Punkt-zu-Punkt gesendet werden.

12. Netzwerk, das so konfiguriert ist, dass es ein Verfahren gemäß einem der vorhergehenden Ansprüche ausführt.

13. Gerät zum Erfassen einer Topologie eines Netzwerks, wobei die Vorrichtung enthält:
eine Nachrichtenerzeugungseinheit (291), die Nachrichten, die die Betriebsartumschaltung anfordern, und Prüfnachrichten erzeugt;
eine Sendeeinheit (292), die die Nachrichten, die eine Umschaltung zu einer vermischen Betriebsart anfordern, und die Prüfnachrichten zu entsprechenden Endgerätevorrichtungen (211, 212, 213, 214) des Netzwerks sendet;
eine Empfangseinheit (293), die Empfangsknoteninformationen von den Endgerätevorrichtungen empfängt, wobei die Empfangsknoteninformationen Informationen über erfasste Prüfnachrichten, die für die entsprechende Endvorrichtung bestimmt sind, und über Prüfnachrichten enthält, die für andere Zielendgerätevorrichtungen bestimmt sind;
eine Verbindungsinformations-Berechungseinheit (294), die Informationen über die Verbindung der Endgerätevorrichtungen aus den Empfangsknoteninformationen berechnet; und
eine Topologieinformations-Extraktionseinheit (295), die Informationen über die Topologie einer Brücke (111) und die Verbindung zwischen den Endgerätevorrichtungen auf der Basis der Verbindungsinformationen und der Empfangsvorrichtungsinformationen berechnet.

14. Vorrichtung nach Anspruch 13, bei der eine Endgerätevorrichtung die Prüfnachricht für eine weitere Zielendgerätevorrichtung empfängt, wenn zur vermischten Betriebsart umgeschaltet wird, und die Empfangsknoteninformationen Informationen darüber enthalten, ob das entsprechende Endgerät die Prüfnachricht für eine weitere Zielendgerätevorrichtung empfängt oder nicht.

## Revendications

1. Procédé de détection de la topologie d'un réseau, le procédé comprenant :
la commutation de dispositifs terminaux (211, 212, 213, 214) du réseau sur un mode croisé ;
la transmission de messages de vérification à des dispositifs terminaux respectifs (211, 212, 213, 214) du réseau par l'un des dispositifs terminaux (211) ;
la réception d'une information de noeud de réception depuis lesdits dispositifs terminaux respectifs, l'information de noeud de réception comprenant une information concernant des messages de vérification captés destinés au dispositif terminal respectif et concernant des messages de vérification destinés à d'autres dispositifs terminaux cibles ;
le calcul d'une information concernant une connexion des dispositifs terminaux (211, 212) à partir de l'information de noeud de réception par l'un des dispositifs terminaux ; et
l'extraction d'une information concernant la topologie d'un pont (111) et les connexions entre des dispositifs terminaux (211, 212, 213, 214) sur la base de l'information de connexion calculée et de l'information de noeud de réception.

2. Procédé selon la revendication 1, comprenant :
la transmission des messages de vérification aux dispositifs terminaux du réseau à des intervalles de temps prédéterminés ; et
le calcul d'une information concernant une connexion des dispositifs terminaux sur une ligne à partir de l'information de noeud de réception.

3. Procédé selon la revendication 1, comprenant la transmission d'un message aux dispositifs terminaux du réseau, le message demandant la commutation sur le mode croisé.

4. Procédé selon la revendication 3, dans lequel certains des dispositifs terminaux (212, 213) reçoivent le message de vérification pour un autre dispositif terminal cible (214) lorsqu'il est commuté sur le mode croisé et l'information de noeud de réception comprend une information indiquant si une partie du dispositif terminal reçoit le message de vérification pour un autre dispositif terminal cible ou non.

5. Procédé selon l'une quelconque des revendications précédentes, dans lequel la transmission des messages de vérification est effectuée par un premier dispositif terminal ; la réception à partir des dispositifs terminaux respectifs est effectuée par un deuxième dispositif terminal ; et le calcul et l'exécution sont effectués par un troisième dispositif terminal.

6. Procédé selon la revendication 5, dans lequel les messages de vérification sont transmis dans un mode en diffusion unique, et la transmission des messages de vérification comprend la transmission d'un message de vérification ciblé pour un quatrième dispositif terminal à un autre dispositif terminal lorsqu'il est commuté sur le mode croisé.

7. Procédé selon la revendication 6, dans lequel le quatrième dispositif terminal est connecté à une même ligne que le deuxième dispositif terminal.

8. Procédé selon l'une quelconque des revendications 5 à 7, dans lequel au moins deux dispositifs terminaux parmi le premier dispositif terminal, le deuxième dispositif terminal et le troisième dispositif terminal sont identiques entre eux.

9. Procédé selon la revendication 4 ou 5, dans lequel certains des dispositifs terminaux collectent des informations concernant le dispositif terminal cible pour les messages de vérification, et l'information de dispositif de réception comprend les informations collectées pour l'un des dispositifs terminaux du réseau.

10. Procédé selon l'une quelconque des revendications précédentes, dans lequel le réseau comprend un réseau domestique.

11. Procédé selon l'une quelconque des revendications précédentes, dans lequel les messages de vérification sont transmis en mode de diffusion unique.

12. Réseau configuré pour mettre en oeuvre un procédé selon l'une quelconque des revendications précédentes.

13. Appareil pour détecter une topologie d'un réseau, l'appareil comportant :
une unité (291) de génération de messages destinée à générer des messages qui demandent une commutation de mode et des messages de vérification ;
une unité de transmission (292) destinée à transmettre les messages qui demandent une commutation sur un mode croisé et les messages de vérification à des dispositifs terminaux respectifs (211, 212, 213, 214) du réseau ;
une unité de réception (293) destinée à recevoir une information de noeud de réception provenant des dispositifs terminaux, l'information de noeud de réception comprenant une information concernant des messages de vérification captés destinés au dispositif terminal respectif et concernant des messages de vérification destinés à d'autres dispositifs terminaux cibles ;
une unité (294) de calcul d'information de connexion destinée à calculer une information concernant une connexion des dispositifs terminaux à partir de l'information de noeud de réception ; et
une unité (295) d'extraction d'information de topologie destinée à extraire une information concernant la topologie d'un pont (111) et les connexions entre les dispositifs terminaux sur la base de l'information de connexion et de l'information de dispositif de réception.

14. Appareil selon la revendication 13, dans lequel un dispositif terminal reçoit le message de vérification pour un autre dispositif terminal cible lorsqu'il est commuté sur le mode croisé et l'information de noeud de réception comprend une information indiquant si le dispositif terminal respectif reçoit le message de vérification pour un autre dispositif terminal cible, ou non.
